(19) Europäisches Patentamt / European Patent Office / Office européen des brevets

(11) **EP 1 975 486 B1**

(12) **FASCICULE DE BREVET EUROPEEN**

(45) Date de publication et mention
de la délivrance du brevet:
**03.12.2014 Bulletin 2014/49**

(51) Int Cl.:
***F16K 31/06*** *(2006.01)* ***B67D 3/00*** *(2006.01)*

(21) Numéro de dépôt: **07290369.3**

(22) Date de dépôt: **28.03.2007**

(54) **Valve de dosage**

Dosierventil

Dispensing valve

(84) Etats contractants désignés:
**DE FR GB IT NL PL**

(43) Date de publication de la demande:
**01.10.2008 Bulletin 2008/40**

(60) Demande divisionnaire:
**14189617.5**

(73) Titulaire: **Fillon Technologies
(SAS Société par Actions Simplifiée)
28210 Faverolles (FR)**

(72) Inventeur: **Chassaing, Antoine
28300 Clévilliers (FR)**

(74) Mandataire: **Godineau, Valérie et al
Ipsilon Brema-Loyer
3, rue Edouard Nignon
44300 Nantes (FR)**

(56) Documents cités:
**EP-A1- 0 236 693      EP-A1- 0 252 421
EP-A1- 0 283 137      DE-A1- 3 409 142
US-A1- 2005 092 386**

**Description**

L'invention concerne une valve pour le dosage de fluides, et en particulier pour le dosage de peintures. La valve selon l'invention trouve une application particulièrement préférée dans le domaine du dosage de teintes pour peintures automobiles.

Actuellement, dans le domaine de la réparation automobile chez les carrossiers, la teinte d'un véhicule est obtenue en mélangeant un certain nombre de teintes de base, couramment entre 5 et 10 bases. Ce mélange est généralement élaboré à partir d'une formule, définit par le fabriquant de peinture, précisant la masse de chaque base à incorporer pour une masse totale de mélange définie. Les systèmes de dosage connus permettent d'atteindre une précision de 0.1 g, ce qui est suffisant pour préparer une masse de mélange totale d'au moins 100 à 300g, suivant la teinte.

Les solutions techniques de dosage connues chez les carrossiers sont basées sur le principe d'un couvercle doseur adapté sur un conteneur, en général une boîte rigide, cf. par exemple le document WO 2006/027450 A2. L'opérateur incline la boîte munie de son couvercle et actionne un système d'ouverture pour permettre à la peinture de s'écouler par gravité. En modulant l'inclinaison et le degré d'ouverture, l'opérateur contrôle le dosage à la goutte. D'autres systèmes connus utilisent des conteneurs semi-rigides ou souples. L'opérateur agit alors sur la pression qu'il exerce sur ce conteneur pour en faire sortir la peinture par un orifice adapté, et peut contrôler la goutte.

Un inconvénient de tels systèmes réside dans le fait que la précision du dosage est limitée à la masse d'une goutte de peinture, soit environ 0.03 à 0.1g. D'autre part, cette goutte peut, à chaque instant, soit tomber dans le récipient de mélange et modifier la pesée, soit rester collée à l'orifice et le souiller. Or aujourd'hui, les bases sont de plus en plus concentrées et couvrantes et les surfaces à réparer sont de plus en plus réduites, ce qui crée un besoin de préparer des petites quantités de peinture, de l'ordre de 30g à 50g. Pour obtenir la même précision colorimétrique actuellement obtenue avec un dosage à 0.1g pour préparer 100 à 300g, il faudrait atteindre une précision de dosage allant jusqu'à 0.01g. Il est donc nécessaire de contrôler une masse nettement inférieure à celle d'une goutte.

Un autre inconvénient des systèmes connus tel que celui décrit dans le document WO 2006/027450 A2 est la complexité de la manipulation pour obtenir un dosage précis : Il s'agit de contrôler simultanément le degré d'inclinaison de la boîte et son degré d'ouverture. De plus, la vitesse de l'écoulement dépend beaucoup du niveau de remplissage du conteneur, de la viscosité de la peinture et du niveau de colmatage du système d'ouverture.

Le document GB 207,392 décrit une valve de dosage de liquide comportant un doigt de gant avec une ouverture à l'une de ses extrémités et un plongeur agencé à l'intérieur du doigt de gant apte à obturer ladite ouverture. Une telle valve est adaptée pour le dosage de liquides chauds et de liquides à caractère corrosif.

En revanche, cette valve est peu utile pour le dosage de liquides ayant une certaine viscosité et ayant tendance à sécher rapidement tels que les peintures. En effet, un liquide visqueux passant à travers la valve du document GB 207,392 aura tendance à ralentir considérablement sa course au niveau de l'ouverture inférieure en forme de tube allongé de ladite valve. Ce ralentissement est dû à la viscosité du liquide et donc à la friction importante qui s'exercera entre le liquide et les parois de l'ouverture tubulaire de la valve. Il y aura donc de fortes chances qu'une partie du liquide visqueux reste piégée et sèche dans l'ouverture tubulaire colmatant ainsi la valve et la rendant inutilisable.

Le document EP 0 252 421 A1 décrit un autre type de valve, comprenant un doigt de gant avec une ouverture à l'une de ses extrémités et munie d'un plongeur d'obturation de cette ouverture. Cette valve est conçue pour les distributeurs automatiques de boissons, donc pour des liquides non visqueux, ne nécessitant pas une précision importante de dosage, et qui ne sont pas sujets aux phénomènes de séchage et d'abrasion.

Le document EP 0 283 137 A1 décrit une valve du même type (à doigt de gant et plongeur d'obturation), adaptée en revanche à la délivrance de liquides tels que des peintures. Le plongeur se termine par un boisseau cône-sur-cône (clapet conique mobile venant en appui contre un siège conique autour de l'ouverture du doigt de gant) et, pour éviter les phénomènes de rétention et faciliter le nettoyage de la tête de valve, la face d'extrémité distale du plongeur vient affleurer l'ouverture en position d'obturation. Cette valve présente cependant l'inconvénient, du fait de sa géométrie, de produire en position ouverte un écoulement turbulent, notamment sous le fait de la pression du liquide éjecté. Cette turbulence est préjudiciable à un dosage satisfaisant, et en outre elle provoque généralement la subsistance d'une goutte en bout de valve juste après la fermeture de celle-ci - d'où la nécessité de prévoir une forme extérieure facile à nettoyer après utilisation.

Le document DE 34 09 142 A1 décrit une autre valve de structure comparable, pour la délivrance de liquides alimentaires tels que des boissons concentrées, avec les mêmes inconvénients et limitations que celle du document précédent.

L'un des buts de l'invention est de remédier aux inconvénients exposés ci-dessus, en proposant une nouvelle structure de valve spécifiquement adaptée au dosage de très grande précision de liquides visqueux tels que des peintures, et qui pallie les difficultés propres à la viscosité du liquide lors de l'expulsion forcée de ce liquide au travers de la valve.

Les buts ci-dessus sont atteints, selon l'invention, par une valve de dosage du type général divulgué par le EP 0 283 137 A1 précité, c'est-à-dire comportant un doigt de gant avec une ouverture à l'une de ses extrémités, et un plongeur agencé à l'intérieur du doigt de gant et disposant d'un obturateur apte à obturer ladite ouverture, l'obturateur étant apte, en position d'obturation, à affleurer la surface extérieure du doigt de gant à proximité de ladite ouverture.

Cette valve est caractérisée, selon l'invention, en ce que le rapport entre le diamètre de la surface de passage et la profondeur de ladite ouverture est nettement supérieur à 1.

L'ouverture est conçue pour offrir une longueur de guidage du jet de fluide traversant la valve la plus courte possible. L'ouverture est aménagée dans une zone de faible épaisseur. La longueur de la zone de contact entre l'ouverture et le jet est faible par rapport à la surface de l'ouverture.

Par « surface de passage » on entend la surface So de l'ouverture en direction transversale par rapport à la direction d'écoulement du fluide. Cette surface de passage peut être circulaire et offre un diamètre Do. Ce diamètre Do est une longueur qui pourrait aussi être qualifiée de diamètre de l'ouverture.

La « profondeur » de l'ouverture est une longueur qui pourrait aussi être appelée "épaisseur" de l'ouverture. Il s'agit de la longueur de l'ouverture dans la direction d'écoulement du fluide. Par conséquent, la profondeur de l'ouverture est perpendiculaire à la surface de passage de celle-ci.

En notant le diamètre de la surface de passage « $D_o$ » et la profondeur « P », l'inégalité énoncée ci-dessus se présente sous la forme suivante :

$$D_o / P \gg 1 \quad \text{(Equation 1)}$$

De préférence, la condition « nettement supérieur à 1 » signifie que ledit rapport est supérieur ou égal à 5, ce qui peut s'écrire sous la forme suivante :

$$D_o / P \geq 5 \quad \text{(Equation 2)}$$

Grâce à une ouverture avec un rapport tel que décrit, le passage de la valve se réduit très brutalement sur une longueur très faible, suivant le principe du diaphragme. La zone du doigt de gant comprenant ladite ouverture peut donc être qualifiée de « diaphragme ». Le flux du fluide est mis à l'air atmosphérique immédiatement en sortie de ce diaphragme. Au niveau de l'étranglement de ce diaphragme, le fluide est fortement accéléré sur une très faible longueur.

Suivant la loi de Bernoulli, cette accélération correspond à la transformation très rapide d'une énergie potentielle de pression en énergie cinétique, sans effet de la viscosité. Le diaphragme à une très faible longueur, pour limiter les pertes de charge en aval de l'étranglement et éviter les phénomènes de turbulence décrits par Reynolds, malgré la vitesse importante du fluide.

On obtient ainsi un jet laminaire du fluide dont le débit ne dépend que des caractéristiques du diaphragme, de la pression appliquée au fluide en entrée de la valve et de la densité du fluide. La viscosité du fluide n'intervient quasiment pas. Ce phénomène est important pour le contrôle du dosage car si les caractéristiques du diaphragme, la pression appliquée et la densité du fluide sont stables et aisés à maîtriser, la viscosité du fluide dépend de nombreux facteurs dont notamment sa température et, lorsqu'il s'agit d'une peinture, de sa perte en solvants. Pour les peintures récentes, à haut extrait sec donc à faible teneur en solvants, une faible perte de solvants entraîne une forte augmentation de la viscosité.

Un autre avantage du jet laminaire est dû au fait qu'en sortie du diaphragme le fluide a une grande vitesse, donc une grande énergie cinétique. En associant au diaphragme un système d'obturation, à savoir le plongeur, installé en amont du diaphragme et venant obturer le débit du fluide directement au niveau de l'étranglement du diaphragme, à savoir ladite ouverture du doigt de gant, et en fermant brutalement l'ouverture à l'aide du plongeur, on obtient une coupure très franche du jet.

Cette coupure du jet se situe dans une zone où le fluide a une vitesse élevée, donc le débit du fluide en amont de l'ouverture est brutalement stoppé. Quant au fluide immédiatement en aval de la zone d'obturation, il possède une énergie cinétique importante et continue sa course. C'est cette énergie cinétique qui permet au fluide de se libérer des forces d'adhérence aux surfaces du diaphragme et du plongeur, et ainsi d'éviter la formation d'une goutte. La suppression ou la forte réduction de la taille de cette goutte permet d'augmenter considérablement la précision du dosage en s'affranchissant de la dispersion due à la goutte, tout en diminuant fortement la salissure de la valve.

En outre, le plongeur dispose d'un obturateur servant à obturer ladite ouverture, l'obturateur étant apte à affleurer, en position d'obturation, la surface extérieure du doigt de gant à proximité de ladite ouverture. De telle façon, l'obturateur est capable de fermer totalement l'ouverture, sans zone de rétention, ce qui favorise une coupure nette du jet de fluide, sans bavure et sans formation de goutte au niveau de l'ouverture.

De préférence, la surface d'obturation de l'obturateur a la forme d'une pointe, d'un plan ou d'un tronc de sphère.

Dans ce contexte, un tronc de sphère est une partie d'une sphère. Un tronc de sphère peut aussi être défini comme une sphère coupée ou tronquée, à laquelle il manque une partie. Ainsi, un tronc de sphère est une partie d'une sphère, de la même manière qu'un tronc de cône est une partie d'un cône.

Dans un mode de réalisation préféré, vu de l'extérieur, le doigt de gant a une zone convexe ou plane à proximité de ladite ouverture. Une telle zone plane, ou bien bombée ou arquée vers l'extérieur, ne présente pas de creux ou concavités externes qui pourraient servir de zone de rétention au fluide. La formation de bavures ou de gouttes est ainsi empêchée.

De manière particulièrement avantageuse, la forme de la zone convexe peut correspondre à une demi-sphère.

De plus, dans le cas d'une zone convexe, ladite ouverture peut se situer au sommet de la zone convexe. Dans le cas d'une zone plane, ladite ouverture peut se situer au centre de la zone plane.

De préférence, le plongeur est réalisé dans une matière magnétique. Dans ce cas de figure, la valve peut en outre comprendre une culasse en matière magnétique, la culasse et le plongeur étant réalisés de telle façon que la présence d'un champ magnétique est apte à créer une force d'attraction entre la culasse et le plongeur. En activant un champ magnétique, le plongeur peut ainsi être attiré vers la culasse pour libérer ladite ouverture. Avantageusement, lors d'une phase d'attraction, le plongeur est en position de butée contre la culasse.

En outre, le rapport de la surface de passage du doigt de gant sur la surface de passage de ladite ouverture est de préférence nettement supérieur à 1.

En notant la surface de passage du doigt de gant « $S_d$» et la surface de passage de l'ouverture « $S_o$ », cette relation s'écrit :

$$S_d \, / \, S_o \gg 1 \quad \text{(Equation 3)}$$

De préférence, la condition « nettement supérieur à 1 » signifie que ledit rapport est supérieur ou égal à 50, ce qui peut s'écrire sous la forme suivante :

$$S_d \, / \, S_o \geq 50 \quad \text{(Equation 4)}$$

La surface de passage du doigt de gant est définie comme l'étendue maximale de la chambre définie par le doigt de gant en direction transversale par rapport à la direction d'écoulement du fluide.

Avec un tel rapport entre les deux surfaces de passage, le conduit en amont de la zone d'obturation de la valve offre un passage relativement important. Ceci permet de limiter au maximum les effets de la viscosité du fluide sur la vitesse de l'écoulement. Ainsi, les pertes de charge en amont du diaphragme sont très faibles car la section de passage est importante, donc la vitesse du fluide est faible. La circulation du fluide au travers de la valve et jusqu'à l'ouverture du doigt de gant est facilitée par une section de passage importante au regard de l'ouverture. Il s'agit d'une part de limiter les pertes de charges dépendantes de la viscosité, mais aussi d'éviter tous régimes turbulents en amont de la zone d'obturation.

Dit autrement, en respectant ledit rapport, on impose une réduction très brutale de la section de passage du fluide. La zone en amont de l'ouverture est relativement large et évasée, et l'ouverture offre un étranglement très net, comme les diaphragmes utilisés comme régulateurs de débits en hydraulique.

Dans un mode de réalisation préféré, la valve de dosage comprend en outre un ressort apte à pousser le plongeur en position d'obturation. De préférence, ledit ressort est agencé au moins en partie à l'intérieur dudit plongeur.

Avantageusement, le plongeur peut comprendre au moins une ouverture permettant le passage du fluide d'une zone d'arrivée du doigt de gant vers ladite ouverture du doigt de gant.

La valve de dosage comprend de préférence en outre un moyen apte à déplacer ledit plongeur entre une position d'obturation et une position de libération de ladite ouverture. Dans un mode de réalisation préféré, ce moyen comprend une bobine électrique coiffant le doigt de gant.

Pour limiter les effets d'un régime transitoire durant lequel l'écoulement n'est pas laminaire, il est préférable que l'ouverture et la fermeture de la valve soient les plus rapides possibles.

De plus, si la valve est pilotée en tout ou rien, son contrôle peut aisément être automatisé.

L'invention couvre aussi un conteneur de fluide avec une valve comprenant au moins en partie les caractéristiques décrites précédemment.

Dans un tel conteneur, le déplacement du fluide peut s'effectuer en mettant le fluide sous pression. Avec un tel déplacement du fluide par pression, les inconvénients d'un système par gravité, tel que décrit dans le document WO 2006/027450 A2, très dépendant du niveau de remplissage du conteneur, n'existent plus. La mise sous pression du fluide permet de s'affranchir de l'influence des variations de niveau du conteneur. En effet, il est aisé d'appliquer une pression suffisamment importante pour rendre négligeable l'effet du niveau de remplissage du conteneur. Dans ce cas de figure, la pression relative entre le fluide dans la zone d'arrivée du doigt de gant et l'extérieur de la valve est de préférence stable.

On va maintenant décrire un exemple de réalisation de la valve selon l'invention, en référence aux dessins annexés.

La figure 1 montre un exemple de réalisation de la valve selon l'invention en coupe longitudinale et en position fermée ;

La figure 2 montre le plongeur de la valve selon la figure 1 vu de face;

La figure 3 montre la valve de la figure 1 en position ouverte lors de l'écoulement d'un fluide à travers la valve; et

La figure 4 est une vue en détail de la partie inférieure du doigt de gant de la valve de la figure 1.

La figure 5 est une vue en coupe selon la ligne V-V de la figure 1.

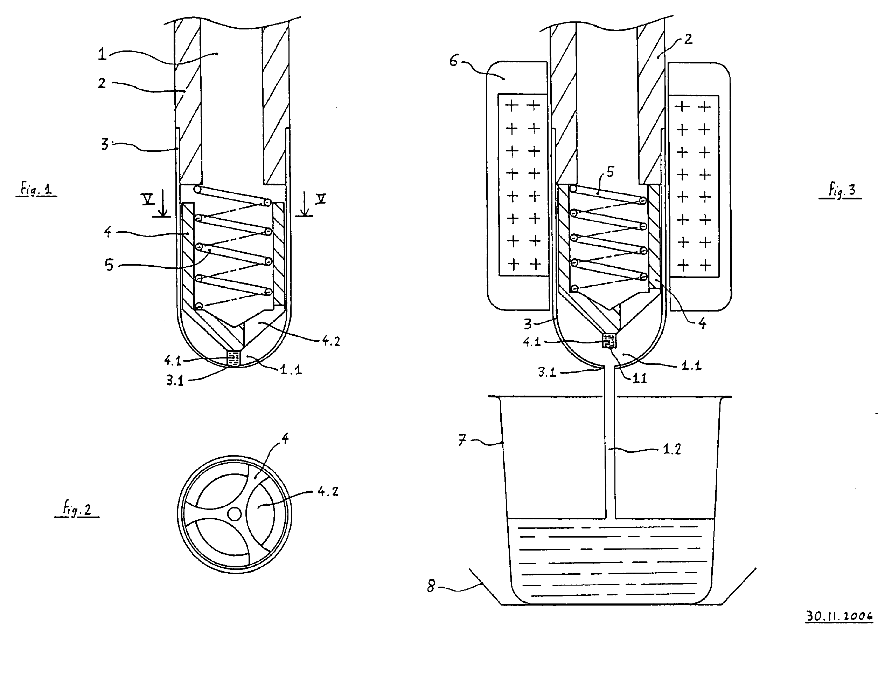

La figure 1 représente un exemple de réalisation d'une valve selon l'invention. A la figure 1, la valve est représentée sans son système de commande électromagnétique, en position fermée.

La valve est constituée d'une culasse 2 connectée à un réservoir à fluide non représenté. Cette culasse est réalisée dans une matière perméable au flux magnétique. Un doigt de gant 3 est fixé à la culasse 2. Il est dans une matière amagnétique. Il comporte à son extrémité une ouverture 3.1.

Guidé dans le doigt de gant se trouve un plongeur 4 réalisé dans une matière perméable au flux magnétique. Le plongeur 4 comporte un obturateur 4.1 apte à fermer l'ouverture 3.1 du doigt de gant 3. Cet obturateur 4.1 peut être une pièce rapportée en élastomère, et la surface d'obturation 11 (cf. figure 3) peut prendre la forme d'une pointe, d'un plan, ou d'un tronc de sphère. Le plongeur est maintenu en position basse grâce à l'action d'un ressort 5.

Le fluide est amené dans la zone d'arrivée 1 sous une certaine pression relative, qui peu être générée par un moyen quelconque, par le simple effet de la gravité, ou par une mise en dépression de l'environnement extérieur de la valve. Le fluide circule dans le corps de la valve, à l'intérieur et autour du plongeur 4 et du ressort 5. Le fluide circule aisément jusqu'à la zone d'obturation 1.1, par les larges ouvertures 4.2 réalisées dans le plongeur 4.

La figure 2 représente une vue du plongeur 4 et met en évidence les ouvertures 4.2 permettant au fluide de circuler de la zone d'arrivée 1 à la zone d'obturation 1.1.

La figure 3 représente la valve en configuration de travail et en position ouverte. Elle est coiffée d'une bobine cylindrique 6 capable d'induire un champ magnétique dans la culasse 2 et dans le plongeur 4, à travers le doigt de gant 3. Ce champ magnétique crée une force d'attraction entre la culasse 2 et le plongeur 4. Lorsque cette force dépasse la résistance du ressort 5, le plongeur 4 se soulève avec l'obturateur 4.1, ce qui libère l'ouverture 3.1 du doigt de gant 3. Le fluide peut alors sortir de la valve en un jet laminaire 1.2 pour être récupéré dans un récipient 7, posé sur le plateau 8 d'une balance.

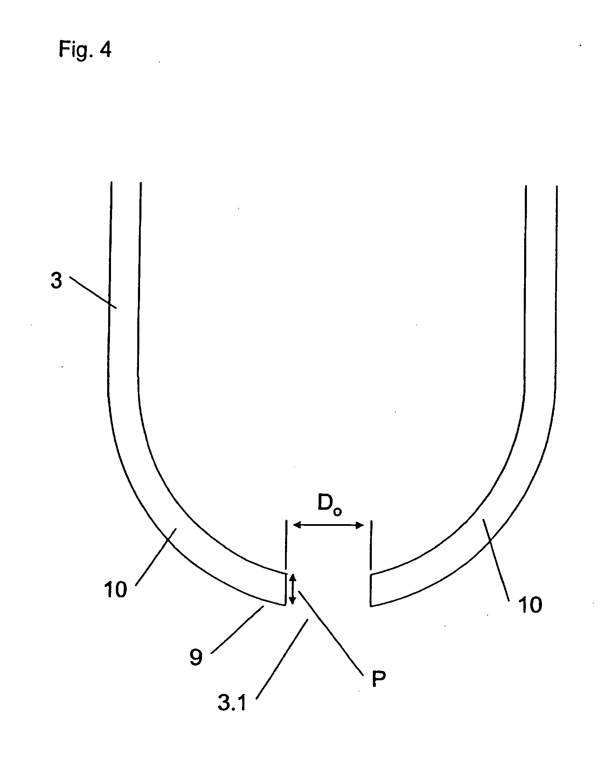

La figure 4 montre en détail la partie inférieure du doigt de gant 3. On distingue bien le diamètre Do de la surface de passage $S_o$ de l'ouverture 3.1, la profondeur P de l'ouverture 3.1, la zone convexe 10 du doigt de gant 3, ainsi que la surface extérieure 9 du doigt de gant 3 à proximité de l'ouverture 3.1.

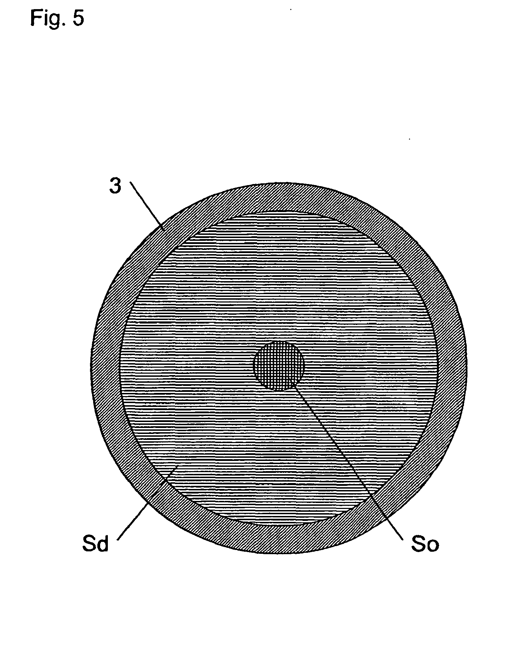

La figure 5 est une vue en coupe selon la ligne V-V de la figure 1. Dans cette vue en coupe, la représentation du ressort 5 et du plongeur 4 a été omise, afin de pouvoir représenter plus clairement la surface de passage Sd du doigt de gant 3 et la surface de passage So de l'ouverture 3.1. On voit clairement que So est nettement inférieur à Sd. Dans la figure 5, il convient de noter que Sd correspond à la totalité de la surface limitée par les parois du doigt de gant 3, incluant en particulier la surface So. Ainsi, So peut être considéré comme une partie centrale de Sd.

Grâce à la valve selon l'invention on obtient un système de dosage qui trouve une application particulièrement avantageuse pour le dosage de teintes de base pour la réparation automobile. Ce système de dosage est économiquement adapté au carrossier moyen, d'une grande précision, facile à utiliser et requiert un minimum de nettoyage.

Bien entendu, l'utilisation de la valve selon l'invention ne se limite pas au domaine des peintures automobiles. En effet, ladite valve peut être utilisée dans toute application nécessitant un dosage de fluide précis et fiable.

**Revendications**

1.  Une valve pour le dosage de fluides visqueux, comportant :

    - un doigt de gant (3) avec une ouverture (3.1) à l'une de ses extrémités, et
    - un plongeur (4) agencé à l'intérieur du doigt de gant (3) et disposant d'un obturateur (4.1) apte à obturer ladite ouverture (3.1), cet obturateur étant apte, en position d'obturation, à affleurer la surface extérieure (9) du doigt de gant à proximité de ladite ouverture,
    **caractérisée en ce que** le rapport entre le diamètre (Do) de la surface de passage (So) et la profondeur (P) de ladite ouverture est nettement supérieur à 1.

2.  La valve de dosage de la revendication 1, où le rapport entre la surface de passage (Sd) du doigt de gant et la surface de passage (So) de ladite ouverture est nettement supérieur à 1.

3.  La valve de dosage de la revendication 1, où la surface d'obturation (11) de l'obturateur a la forme d'une pointe, d'un plan ou d'un tronc de sphère.

4.  La valve de dosage de la revendication 1, où le doigt de gant, vu de l'extérieur, a une zone convexe (10) ou plane à proximité de ladite ouverture (3.1).

5.  La valve de dosage de la revendication 4, comprenant une zone convexe dont la forme correspond à une demi-sphère.

6.  La valve de dosage de la revendication 4, où ladite ouverture se situe au sommet de la zone convexe dans le cas d'une zone convexe, et au centre de la zone plane dans le cas d'une zone plane.

**7.** La valve de dosage de la revendication 1, où le plongeur est au moins en partie réalisé dans une matière magnétique ou perméable au flux magnétique.

**8.** La valve de dosage de la revendication 7, où la valve comprend en outre une culasse (2) en matière magnétique, la culasse et le plongeur étant réalisés de façon que la présence d'un champ magnétique soit apte à créer une force d'attraction entre la culasse et le plongeur.

**9.** La valve de dosage de la revendication 1, comprenant en outre un ressort (5) apte à pousser le plongeur en position d'obturation.

**10.** La valve de dosage de la revendication 9, où ledit ressort est agencé au moins en partie à l'intérieur dudit plongeur.

**11.** La valve de dosage de la revendication 1, où le plongeur comprend au moins une ouverture (4.2) permettant le passage d'un fluide d'une zone d'arrivée (1) du doigt de gant vers ladite ouverture du doigt de gant.

**12.** La valve de dosage de la revendication 1, comprenant en outre un moyen (6) apte à déplacer ledit plongeur entre une position d'obturation et une position de libération de ladite ouverture.

**13.** La valve de dosage de la revendication 12, où ledit moyen comprend une bobine électrique (6) coiffant le doigt de gant.

**14.** Conteneur de fluide, comprenant une valve selon l'une des revendications 1 à 13.


**Patentansprüche**

**1.** Dosierventil für viskose Fluide, das aufweist:

- einen Handschuhfinger (3) mit einer Öffnung (3.1) an einem seiner Enden und
- einen im Handschuhfinger (3) ausgebildeten Taucher (4), der über einen Verschluss (4.1) verfügt, der imstande ist, die Öffnung (3.1) zu verschließen, wobei dieser Verschluss in Verschlussstellung imstande ist, an der äußeren Oberfläche (9) des Handschuhfingers in der Nähe der Öffnung anzuliegen, **dadurch gekennzeichnet, dass** das Verhältnis zwischen dem Durchmesser ($D_o$) der Durchgangsoberfläche (So) und der Tiefe (P) der Öffnung deutlich größer als 1 ist.

**2.** Dosierventil nach Anspruch 1, wobei das Verhältnis zwischen der Durchgangsoberfläche (Sd) des Handschuhfingers und der Durchgangsoberfläche ($S_o$) der Öffnung deutlich größer als 1 ist.

**3.** Dosierventil nach Anspruch 1, wobei die Verschlussoberfläche (11) des Verschlusses die Form einer Spitze, einer Ebene oder eines Kugelstumpfs hat.

**4.** Dosierventil nach Anspruch 1, wobei der Handschuhfinger (3), gesehen von außen, eine konvexe (10) oder ebene Zone in der Nähe der Öffnung (3.1) hat.

**5.** Dosierventil nach Anspruch 4, das eine konvexe Zone aufweist, deren Form einer Halbkugel entspricht.

**6.** Dosierventil nach Anspruch 4, wobei sich die Öffnung im Fall einer konvexen Zone an der Spitze der konvexen Zone und im Fall einer ebenen Zone im Zentrum der ebenen Zone befindet.

**7.** Dosierventil nach Anspruch 1, wobei der Taucher mindestens teilweise aus einem magnetischen oder für Magnetfluss durchlässigen Material hergestellt ist.

**8.** Dosierventil nach Anspruch 7, wobei das Ventil ferner eine Joch (2) aus magnetischem Material umfasst, wobei das Joch und der Taucher derart hergestellt sind, dass die Anwesenheit eines Magnetfelds imstande ist, eine Anziehungskraft zwischen dem Joch und dem Taucher zu erzeugen.

**9.** Dosierventil nach Anspruch 1, das ferner eine Feder (5) umfasst, die imstande ist, den Taucher (4) in Verschlussstellung zu stoßen.

**10.** Dosierventil nach Anspruch 9, wobei die Feder mindestens teilweise im Taucher ausgebildet ist.

**11.** Dosierventil nach Anspruch 1, wobei der Taucher (4) mindestens eine Öffnung (4.2) umfasst, die den Durchgang eines Fluids von einer Ankunftszone (1) des Handschuhfingers zur Öffnung des Handschuhfingers erlaubt.

**12.** Dosierventil nach Anspruch 1, das ferner ein Mittel (6) umfasst, das imstande ist, den Taucher zwischen einer Verschlussstellung und einer Freigabestellung der Öffnung zu verlagern.

**13.** Dosierventil nach Anspruch 12, wobei das Mittel eine elektrische Spule (6) umfasst, die den Handschuhfinger bedeckt.

**14.** Fluidbehälter, der ein Ventil nach einem der Ansprüche 1 bis 13 umfasst.

**Claims**

1. A valve for dosing viscous fluids, including:

   - a thimble (3) with an opening (3.1) at one of its ends, and
   - a plunger (4) arranged inside the thimble (3) and having a stopper (4.1) able to close off said opening (3.1), said stopper being able, in the closing off position, to be flush with the outer surface (9) of the thimble near said opening, **characterized in that** the ratio between the diameter (Do) of the passage surface (So) and the depth (P) of said opening is significantly greater than 1.

2. The dosing valve according to claim 1, wherein the ratio between the passage surface (Sd) of the thimble and the passage surface (So) of said opening is significantly greater than 1.

3. The dosing valve according to claim 1, wherein the closing off surface (11) of the stopper is in the shape of a tip, a plane or a sphere segment.

4. The dosing valve according to claim 1, wherein the thimble, seen from the outside, has a convex zone (10) or planar zone near said opening (3.1).

5. The dosing valve according to claim 4, comprising a convex zone whereof the shape corresponds to a half-sphere.

6. The dosing valve according to claim 4, wherein said opening is situated at the apex of the convex zone in the case of a convex zone, and at the center of the planar zone in the case of a planar zone.

7. The dosing valve according to claim 1, where the plunger is at least partially made from a magnetic material or a material permeable to the magnetic flux.

8. The dosing valve according to claim 7, wherein the valve further comprises a cylinder head (2) made from a magnetic material, the cylinder head and the plunger being made such that the presence of a magnetic field can create an attraction force between the cylinder head and the plunger.

9. The dosing valve according to claim 1, further comprising a spring (5) able to push the plunger into the closing off position.

10. The dosing valve according to claim 9, wherein said spring is arranged at least partially inside said plunger.

11. The dosing valve according to claim 1, wherein the plunger comprises at least one opening (4.2) allowing the passage of a fluid from an intake zone (1) of the thimble toward said opening of the thimble.

12. The dosing valve according to claim 1, further comprising a means (6) able to move said plunger between a closing off position and a position freeing said opening.

13. The dosing valve of figure 12, wherein said means comprises an electric coil (6) capping said thimble.

14. A fluid container, comprising a valve according to one of claims 1 to 13.

30.11.2006

Fig. 3

2
4
1.1
1.1
5
1.2
3
4.1
3.1
6
7
8

Fig. 1

V
4.2
1.1
5
1
2
3
4.1
3.1
V
4
5

Fig. 2

4
4.2

Fig. 4

Fig. 5

**EP 1 975 486 B1**

**Documents brevets cités dans la description**

- WO 2006027450 A2
- GB 207392 A
- EP 0252421 A1
- EP 0283137 A1
- DE 3409142 A1